(19) Europäisches Patentamt European Patent Office Office européen des brevets

(11) **EP 3 636 694 A1**

(12) **EUROPEAN PATENT APPLICATION**
published in accordance with Art. 153(4) EPC

(43) Date of publication:
**15.04.2020 Bulletin 2020/16**

(51) Int Cl.:
**C08J 5/18** *(2006.01)*  **C08L 67/02** *(2006.01)*

(21) Application number: **18813533.9**

(22) Date of filing: **28.05.2018**

(86) International application number:
**PCT/JP2018/020338**

(87) International publication number:
**WO 2018/225558 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2017  JP 2017111642**
**07.06.2017  JP 2017112682**

(71) Applicant: **Toyobo Co., Ltd.**
**Osaka-shi**
**Osaka 530-8230 (JP)**

(72) Inventors:
• **TAMARI, Noboru**
**Inuyama-shi**
**Aichi 484-8508 (JP)**
• **GOTO, Takamichi**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY ORIENTED POLYESTER FILM**

(57)    To obtain a polyester film that has excellent pinhole resistance and bag breakage resistance, excellent adhesiveness after boiling or retorting, and little pitch deviation during printing or position deviation during laminating with a sealant, etc. A biaxially oriented polyester film simultaneously fulfilling (a)-(d). (a) Being a polyester resin composition containing 60%-90% by weight polybutylene teraphthalate resin (A) and 10%-40% by weight of a polyester resin (B) other than the polybutylene ter-aphthalate resin (A). (b) Having a dimensional change rate at 80°C of no more than 1.0% in the longitudinal direction of the film, relative to a film base length of a temperature dimensional change curve measured using a thermal mechanical analyzer. (c) Having a thermal shrinkage at 150°C of no more than 4.0% in both the longitudinal and width directions of the film. (d) Having a film plane orientation ΔP of 0.136-0.154.

EP 3 636 694 A1

**Description**

TECHNICAL FIELD

The present invention relates to a polyester film used in the packaging field of food products, pharmaceutical products, industrial products, and the like. More specifically, the present invention relates to a polyester film that has excellent pinhole resistance and bag breakage resistance, excellent adhesiveness after boiling or retorting, and little pitch deviation during printing or position deviation during laminating with a sealant.

BACKGROUND ART

Since a polybutylene terephthalate resin has excellent impact resistance, gas barrier properties, and chemical resistance to a polyethylene terephthalate resin, the application of the polybutylene terephthalate resin has been examined in the field of films such as food packaging films and draw forming films.

For example, Patent Document 1 discloses that a biaxially oriented polybutylene terephthalate film made of a polyester-based resin composition containing a polybutylene terephthalate resin singly or a mixture thereof with 30% by weight or less of a polyethylene terephthalate resin based on the polybutylene terephthalate resin is included, and the number of pinholes when bent 1000 times under the conditions of 5°C × 40% RH is adjusted to 10 or less, as a result of which the film is more suitable for a packaging material for liquid filling.

However, there is no disclosure about improvement in pitch deviation or position deviation during laminating with a sealant.

On the other hand, Patent Document 2 discloses that, in a film made of a polyethylene terephthalate resin and a polybutylene terephthalate resin, a transesterification index between the polyethylene terephthalate resin and the polybutylene terephthalate resin is adjusted to 10% or less, whereby the heat resistance of the un-stretched sheet is maintained and no fusion cutting occurs during stretching.

However, there is no disclosure about improvement in pitch deviation or position deviation during laminating with a sealant.

PRIOR ART DOCUMENTS

PATENT DOCUMENTS

Patent Document 1: JP-A-2014-015233
Patent Document 2: JP-A-2003-2987

DISCLOSURE OF THE INVENTION

PROBLEMS TO BE SOLVED BY THE INVENTION

The present invention has been made in view of the problems in the related art. That is, an object of the present invention is to obtain a polyester film that has excellent pinhole resistance and bag breakage resistance, excellent adhesion strength even after boiling or retorting, and little pitch deviation during printing or position deviation during laminating with a sealant.

MEANS FOR SOLVING THE PROBLEMS

The present inventors have conducted intensive studies in order to achieve the object. As a result, they have found that the dimensional change rate at 80°C in a longitudinal direction, thermal shrinkage, and plane orientation coefficient of a biaxially oriented stretched film mainly containing a polybutylene terephthalate resin is adjusted to a specific range, whereby the film has excellent pinhole resistance and bag breakage resistance and excellent adhesion strength even after retorting. Further, in a printing step on a base material layer and a laminating step to a sealant or the like, the dimensional change of the film is small even in the case where the film is heated while tension is applied, whereby it is possible to make pitch deviation during printing and position deviation during laminating with a sealant unlikely to occur.

That is, the present invention includes configurations below:

[1] A biaxially oriented polyester film simultaneously satisfying conditions (a) to (d) below:

(a) the film includes a polyester resin composition containing 60 to 90% by weight of a polybutylene terephthalate resin (A) and 10 to 40% by weight of a polyester resin (B) other than the polybutylene terephthalate resin (A);
(b) a dimensional change rate at 80°C in a longitudinal direction of the film is 1.0% or less with respect to an original length of the film in a temperature-dimensional change curve measured using a thermal mechanical analyzer (TMA);
(c) a thermal shrinkage at 150°C in a longitudinal direction and a direction perpendicular to the direction in which the film flows, that is, in a so-called transverse direction, of the film is 4.0% or less; and
(d) a plane orientation coefficient $\Delta$P of the film is in a range of 0.136 to 0.154.

[2] The biaxially oriented polyester film according to [1], where the polyester resin (B) other than the polybutylene terephthalate resin (A) is at least one resin selected from (1) to (5) below:

(1) polyethylene terephthalate, polyethylene naphthalate (PEN), polybutylene naphthalate (PBN), and polypropylene terephthalate (PPT);
(2) a polybutylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized;
(3) a polybutylene terephthalate resin in which at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized;
(4) a polyethylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized; and
(5) a polyethylene terephthalate resin in which at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized.

[3] The biaxially oriented polyester film according to [1], where the polyester resin (B) other than the polybutylene terephthalate resin (A) is polyethylene terephthalate, and a transesterification ratio represented by a chain structure ratio (%) of ethylene glycol (EG), terephthalic acid (TPA), and butanediol (BD) in the polyester resin composition is in a range of 0.8 to 3.0%.

[4] A laminated film in which a heat-sealable resin layer having a thickness of 10 to 100 $\mu$m is laminated on at least one surface of the biaxially oriented polyester film according to any one of [1] to [3].

EFFECT OF THE INVENTION

The present inventors have used the technique to obtain a polyester film that has excellent pinhole resistance and bag breakage resistance, excellent adhesion strength even after boiling or retorting, and little pitch deviation during printing or position deviation during laminating with a sealant.

MODE FOR CARRYING OUT THE INVENTION

Hereinafter, the present invention will be described in detail.

(Polyester resin composition)

The polyester resin composition used for the film of the present invention mainly contains the polybutylene terephthalate resin (A) as a constituent. The content rate of the polybutylene terephthalate resin (A) is preferably 60% by weight or more, preferably 75% by weight or more, and still more preferably 85% by weight or more. When the content rate is less than 60% by weight, the pinhole resistance and bag breakage resistance are lowered.
In the polybutylene terephthalate resin (A) used as the main constituent, the content rate of terephthalic acid as a component of dicarboxylic acid is preferably 90 mol% or more, more preferably 95 mol% or more, still more preferably 98 mol% or more, and most preferably 100 mol%. The content rate of 1,4-butanediol as the glycol component is preferably 90 mol% or more, more preferably 95 mol% or more, still more preferably 97 mol% or more. Most preferably, by-products other than by-products formed by an ether bond of 1,4-butanediol during polymerization are not contained.

The polyester resin composition used in the film of the present invention can contain the polyester resin (B) other than the polybutylene terephthalate resin (A) in order to adjust the film formability at the time of performing biaxial stretching and the mechanical characteristics of the film to be obtained.

Examples of the polyester resin (B) other than the polybutylene terephthalate resin (A) include at least one resin selected from (1) to (5) below:

(1) polyethylene terephthalate, polyethylene naphthalate (PEN), polybutylene naphthalate (PBN), and polypropylene terephthalate (PPT);
(2) a polybutylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized;
(3) a polybutylene terephthalate resin in which at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized;
(4) a polyethylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized; and
(5) a polyethylene terephthalate resin in which at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized.

Among the resins, the polyethylene terephthalate resin has a high melting point and is excellent in heat resistance, so the dimension is unlikely to change. The resin has excellent compatibility with the polybutylene terephthalate resin, so the transparency is excellent. Thus, the polyethylene terephthalate and the copolymerized polyethylene terephthalate resin are preferable, and the polyethylene terephthalate is particularly preferable as the polyester resin (B) other than the polybutylene terephthalate resin (A).

The lower limit of the intrinsic viscosity of the polybutylene terephthalate resin (A) used for the film of the present invention is preferably 0.8 dl/g, more preferably 0.95 dl/g, and still more preferably 1.0 dl/g. In the case where the intrinsic viscosity of the polybutylene terephthalate resin (A) is less than 0.9 dl/g, the intrinsic viscosity of the film obtained by film formation is lowered, and the bag breakage resistant strength and the piercing strength may be reduced.

The upper limit of the intrinsic viscosity of the polybutylene terephthalate resin (A) is preferably 1.3 dl/g. When the intrinsic viscosity is more than the value, the adhesion strength of the film may be lowered, or the stress during stretching becomes too high, and the film formability may deteriorate. Further, in the case of using a polybutylene terephthalate resin having a high intrinsic viscosity, it is necessary to increase the extrusion temperature because the melt viscosity of the resin is high. However, when the polybutylene terephthalate resin is extruded at a higher temperature, decomposition products tend to be produced.

The upper limit of the additive amount of the polyester resin (B) other than the polybutylene terephthalate resin (A) is preferably 40% by weight or less, more preferably 35% by weight or less, and particularly preferably 15% by weight or less. When the additive amount of the polyester resin (B) other than the polybutylene terephthalate resin (A) is more than 40% by weight, the pinhole resistance and the bag breakage resistance may be impaired, and further the transparency and gas barrier properties may be reduced.

The polyester resin composition may contain conventionally known additives such as a lubricant, a stabilizer, a coloring agent, an oxidation inhibitor, an antistatic agent, and an ultraviolet absorber, as necessary.

As the type of lubricant for adjusting the dynamic friction coefficient of the film of the present invention, inorganic lubricants such as silica, calcium carbonate, and alumina, as well as organic lubricants are preferable, and silica and calcium carbonate are more preferable. Among the lubricants, silica is particularly preferable from the view point of reducing haze. The transparency and sliding properties are provided by these lubricants.

The lower limit of the content of the lubricant in the polyester resin composition is preferably 100 ppm by weight, and more preferably 800 ppm by weight. When the lower limit is less than 100 ppm by weight, the sliding properties may be reduced. The upper limit of the content of the lubricant is preferably 20000 ppm by weight, more preferably 1000 ppm by weight, and particularly preferably 1800 ppm by weight. When the content of the lubricant is more than 20000 ppm by weight, the transparency may be reduced.

(Method of producing biaxially oriented polyester film)

As a preferred method of obtaining the biaxially oriented polyester film of the present invention, there is a method in which, at the time of casting a melted polyester resin composition on a cooling roll, raw materials of the polyester resin composition having the same composition are multi-layered and cast.

Since the polybutylene terephthalate resin has a high crystallization rate, crystallization proceeds even at the time of casting. At this time, in the case of casting in monolayering without multi-layering, there is no barrier that can inhibit growth of crystals, and thus these crystals are grown into large-sized spherulites. As a result, the obtained unstretched sheet has high yield stress, and tends to break at the time of stretching in the longitudinal direction (hereinafter, sometimes abbreviated as "MD").

In addition, since crystallization proceeds during stretching in the longitudinal direction, the film tends to break during stretching in a direction perpendicular to the direction in which the film flows, that is, in a so-called transverse direction (hereinafter, sometimes abbreviated as "TD".) The bag breakage resistant strength and piercing strength of the obtained biaxially oriented polyester film become insufficient.

The effect in the case of multi-layering at the time of casting allows for a reduction in the transesterification ratio of the polyester resin (B) other than the polybutylene terephthalate resin (A) in the polyester resin composition as compared with the transesterification ratio in the case of monolayering. As a result, for example, even if a polyethylene terephthalate resin having high heat resistance is used as the polyester resin (B) other than the polybutylene terephthalate resin (A), the crystalline nature of the polyester resin composition is lowered due to the transesterification reaction with the polybutylene terephthalate resin (A), thereby reducing an adverse effect such that the film tends to stretch at a high temperature. Consequently, the dimensional change rate at 80°C in the longitudinal direction (MD) of the film is 1.0% or less with respect to the original length of the film in the temperature-dimensional change curve measured using the thermal mechanical analyzer (TMA) (hereinafter, sometimes abbreviated as "TMA"), so that it is possible to prevent the pitch deviation during printing and the position deviation during laminating with a sealant. The cause of the reduction in the transesterification ratio due to multi-layering is not clear, however the present inventors speculate that the cause is that the layers are physically separated during multi-layering.

Specifically, the method of producing the biaxially oriented polybutylene terephthalate film of the present invention includes at least steps (1) to (4): a step (1) of melting a polyester resin composition containing 60% by weight or more of a polybutylene terephthalate resin to form a molten fluid; a step (2) of forming a laminated fluid having a number of lamination of 60 or more and including the molten fluid; a step (3) of discharging the laminated fluid from a die and bringing the discharged fluid into contact with a cooling roll to be solidified, thereby forming a laminated body; and a step (4) of biaxially stretching the laminated body.

There is no problem even if other steps are inserted between the step (1) and the step (2) and between the step (2) and the step (3). For example, a filtration step, a temperature change step, and the like may be inserted between the step (1) and the step (2). Further, the temperature change step, a charge addition step, and the like may be inserted between the step (2) and the step (3). However, there should not be a step of breaking the laminated structure formed in the step (2) between the step (2) and the step (3).

In the step (1), the method of melting the polyester resin composition to form a molten fluid is not particularly limited, and a preferable method includes a method of melting the polyester resin composition under heat using a single screw extruder or a twin-screw extruder.

The method of forming the laminated fluid in the step (2) is not particularly limited. From the viewpoints of facility simplicity and maintainability, a static mixer and/or a multi-layer feed block is more preferable. Further, a static mixer and/or a multi-layer feed block having a rectangular melt line from the extruder to a die is more preferable, from the viewpoint of uniformity of the sheet in the transverse direction. It is still more preferable to use a static mixer or a multi-layer feed block having a rectangular melt line. A resin composition made of a plurality of layers formed by combining a plurality of polyester resin compositions may be passed through any one of or two or more of a static mixer, a multi-layer feed block, and a multi-layer manifold.

The theoretical number of lamination in the step (2) needs to be 60 or more. The lower limit of the theoretical number of lamination is preferably 200, and more preferably 500. When the theoretical number of lamination is too small, or the distance between layer interfaces becomes long, the crystal size becomes too large, and thus the effect of the present invention is unlikely to be obtained. Further, the crystallinity degree in the vicinity of both ends of the sheet increases, the film formation becomes unstable, and further the transparency after molding may decrease. The upper limit of the theoretical number of lamination in the step (2) is not particularly limited, and is preferably 100,000, more preferably 10,000, and still more preferably 7000. Even if the theoretical number of lamination is extremely increased, the effect may be saturated.

In the case where the lamination in the step (2) is performed by a static mixer, the theoretical number of lamination can be adjusted by selecting the number of elements of the static mixer. The static mixer is generally known as a static-type mixing device (line mixer) having no drive unit, and the fluid entering the mixer is sequentially stirred and mixed by the elements. However, when a high-viscosity fluid is passed through the static mixer, the high-viscosity fluid is divided and laminated to form a laminated fluid. Each time the high-viscosity fluid passes through one element of the static mixer, the high-viscosity fluid is divided into two and the two fluids are joined together and laminated. For this reason, a high-viscosity fluid is passed through a static mixer having n elements to form a laminated fluid having a theoretical number of lamination N of the n-th power of 2.

A typical static mixer element has a structure in which a rectangular plate is twisted by 180 degrees, and a right element and a left element are present depending on the twisting direction. The dimension of each of the elements is basically 1.5 times the length with respect to the diameter. The static mixer that can be used in the present invention is not limited to those described above.

In the case where the lamination in the step (2) is performed by a multi-layer feed block, the theoretical number of lamination can be adjusted by selecting the number of times of division and lamination of the multi-layer feed block. It is possible to install a plurality of multi-layer feed blocks in series. Further, it is also possible to use, as a laminated fluid, a high-viscosity fluid itself supplied to the multi-layer feed block. For example, in the case where the number of lamination of the high-viscosity fluid supplied to the multi-layer feed block is p, the number of division and lamination of the multi-layer feed block is q, and the number of multi-layer feed blocks installed is r, the number of lamination N of the laminated fluid is an r-th power of p × q.

Note that in the case where multi-layering is performed using the polyester resin composition having the same composition as in the present invention, only a single extruder can be used to introduce the above-mentioned multi-layering apparatus into a melt line from the extruder to a die.

In the step (3), the laminated fluid is discharged from a die and brought into contact with a cooling roll to be solidified.

The lower limit of the die temperature is preferably 255°C, more preferably 260°C, and particularly preferably 265°C. When the die temperature is less than the value, the discharge may become unstable and the thickness may become uneven. Further, the transesterification ratio of the film decreases and thus the crystalline nature of the film increases, whereby the adhesion strength with a sealant or the like tends to decrease.

Furthermore, a polyethylene terephthalate (PET) resin having a high melting point staying in the step of melt-extruding the resin becomes an unmelted material, the resin is mixed into the film and become a foreign substance, and this may impair the quality of the film. The upper limit of the melting temperature of the resin is preferably 285°C, more preferably 280°C, and most preferably 275°C. When the melting temperature of the resin is more than the value, decomposition of the resin proceeds and the film becomes brittle. In the case of adding the PET, the transesterification ratio of the film becomes too high, and thus the crystalline nature of the film decreases. Accordingly, the dimensional change rate at 80°C in the longitudinal direction (MD) of the film is more than 1.0% with respect to an original length of the film in a temperature-dimensional change curve measured using the TMA, and the film tends to stretch in the running direction due to the tension applied in the printing step and the laminating step to a sealant, whereby pitch deviation during printing or position deviation during laminating with a sealant may occur.

The upper limit of the die temperature is preferably 320°C, more preferably 300°C or less, and still more preferably 280°C or less. When the temperature is more than the value, the thickness may become uneven, the resin may deteriorate, and further the appearance may become poor because of staining of die lips and the like.

The upper limit of the temperature of the cooling roll is preferably 25°C, and more preferably 20°C or less. When the temperature of the cooling roll is more than the value, the crystallinity degree of the melted polyester resin composition when cooled and solidified becomes excessively high, whereby the stretching may be difficult. The lower limit of the temperature of the cooling roll is preferably 0°C. When the temperature of the cooling roll is less than the value, the effect of inhibiting crystallization may be saturated when the melted polyester resin composition is cooled and solidified. Further, when the temperature of the cooling roll is in the range, it is preferable to lower the humidity of the environment in the vicinity of the cooling roll in order to prevent dew formation.

The melted polyester resin composition is cast on the surface of the cooling roll, and thereafter the temperature of the surface of the cooling roll rises because a high-temperature resin comes into contact with the surface. Usually, a chill roll is cooled by setting a pipe in the inside of the roll and passing cooling water therethrough, and it is necessary to reduce the temperature difference in the transverse direction of the chill roll surface by securing a sufficient amount of cooling water, devising the arrangement of the pipe, performing maintenance so that sludge does not adhere to the pipe, and the like. Particularly, attention should be paid in the case of cooling the resin at a low temperature without using a multi-layering method or the like.

At this time, the thickness of the un-stretched sheet is preferably in a range of 15 to 2500 μm. The thickness of the un-stretched sheet is more preferably 500 μm or less, and still more preferably 300 μm or less.

The casting in the multi-layer structure mentioned above is performed in at least 60 layers or more, preferably 250 layers or more, and more preferably 1000 layers or more. When the number of layers is small, the spherulite size of the un-stretched sheet is increased, whereby not only the effect of improving stretchability is small, but also the effect of decreasing the yield stress of the obtained biaxially stretched film is lost.

Subsequently, the stretching method in the step (4) will be described. The stretching method may be either a simultaneous biaxial stretching method or a sequential biaxial stretching method, and the sequential biaxial stretching method is most preferable from the viewpoints of good pinhole resistance, good bag breakage resistance, easiness of increasing the plane orientation coefficient, easiness of making the film thickness uniform in the transverse direction, high film forming speed, and high productivity.

The lower limit of the stretching temperature in the longitudinal direction (MD) of the film is preferably 55°C, and more preferably 60°C. When the stretching temperature is less than 55°C, not only breakage tends to occur, but also the orientation in the vertical direction is strengthened by stretching at a low temperature. Thus, the shrinkage stress increases during heat setting, thereby increasing the distortion in the molecular orientation in the transverse direction. As a result, the linearly tearing property in the longitudinal direction may decrease. The upper limit of the stretching temperature in the MD is preferably 100°C, and more preferably 95°C. When the stretching temperature is more than 100°C, no orientation is applied, whereby mechanical characteristics may be reduced.

The lower limit of the stretching ratio in the MD is preferably 3.0 times, and particularly preferably 3.2 times. When the stretching ratio is less than the value, it is difficult to make the orientation coefficient in the longitudinal direction of the obtained biaxially oriented polyester film 0.049 or more. As a result, in the case where the obtained biaxially oriented polyester film goes through the printing step and the laminating step to a sealant, the film tends to stretch due to the tension and temperature applied to the film. The dimensional change rate at 80°C in the longitudinal direction of the film is more than 1.0% with respect to an original length of the film in a temperature-dimensional change curve measured using the TMA, whereby pitch deviation of printed patterns and position deviation during laminating with a sealant may occur.

The upper limit of the stretching ratio in the MD is preferably 4.3 times, more preferably 4.0 times, and particularly preferably 3.8 times. When the stretching ratio in the MD is more than the value, the effect of improving the mechanical strength and thickness unevenness may be saturated.

The lower limit of the stretching temperature in the transverse direction (TD) of the film is preferably 60°C. When the stretching temperature is less than the value, breakage may be likely to occur. The upper limit of the stretching temperature in the TD is preferably 100°C. When the stretching temperature is more than the value, the orientation is not applied and the mechanical characteristics may be reduced.

The lower limit of the stretching ratio in the TD is preferably 3.5 times, more preferably 3.6 times, and particularly preferably 3.7 times. When the stretching ratio in the TD is less than the value, the orientation coefficient in the transverse direction becomes small, whereby the mechanical strength and thickness unevenness may deteriorate. The upper limit of the stretching ratio in the TD is preferably 5 times, more preferably 4.5 times, and particularly preferably 4.0 times. When the stretching ratio in the MD is more than the value, the effect of improving the mechanical strength and thickness unevenness may be saturated.

The lower limit of the thermo-setting temperature in the transverse direction (TD) of the film is preferably 200°C, and more preferably 205°C. When the thermo-setting temperature is less than the value, the thermal shrinkage increases, and there is a possibility that pitch deviation may occur during printing or position deviation may occur during laminating with a sealant. The upper limit of the thermo-setting temperature in the TD is preferably 240°C. When the thermo-setting temperature is more than the value, the film melts. Even if the film does not melt, the film may become extremely brittle.

The lower limit of the relaxation rate in the transverse direction (TD) of the film is preferably 0.5%. When the relaxation rate is less than the value, breakage may tend to occur during heat setting. The upper limit of the relaxation rate in the TD is preferably 7%. When the relaxation rate is more than the value, sagging may occur and result in thickness unevenness, and further shrinkage in the longitudinal direction during heat setting may become large. Thus, the distortion of molecular orientation in the end part may become large and result in uneven dimensional stability in the transverse direction.

(Characteristics of biaxially oriented polyester film)

In the biaxially oriented polyester film of the present invention, the lower limit of the film thickness is preferably 3 μm, more preferably 5 μm, and still more preferably 8 μm. When the film thickness is less than 3 μm, the strength as a film may be insufficient.

The upper limit of the film thickness is preferably 100 μm, more preferably 75 μm, and still more preferably 50 μm. When the film thickness is more than 100 μm, the film may become too thick and it may be difficult to perform the processing to achieve the purpose of the present invention.

The lower limit of the intrinsic viscosity of the biaxially oriented polybutylene terephthalate film of the present invention is preferably 0.80 dl/g, more preferably 0.85 dl/g, still more preferably 0.90 dl/g, and particularly preferably 0.95 dl/g. When the intrinsic viscosity is more than the value, the impact strength, piercing resistance, and the like are improved. Further, the barrier property after bending is also good.

The upper limit of the intrinsic viscosity of the biaxially oriented polybutylene terephthalate film is preferably 1.2 dl/g, and more preferably 1.1 dl/g. When the intrinsic viscosity is more than the value, the stress at the time of stretching is not too high, and thus the film formability is good.

The biaxially oriented polybutylene terephthalate film of the present invention preferably has a resin having the same composition throughout the film.

It is necessary that the dimensional change rate at 80°C in the longitudinal direction (MD) of the film is 1.0% or less with respect to the original length of the film in a temperature-dimensional change curve measured using a thermal mechanical analyzer (TMA). The dimensional change rate is preferably 0.8% or less, more preferably 0.6% or less, and particularly preferably 0.4% or less.

When the dimensional change rate is 1.0% or less, it is possible to reduce pitch deviation of printed patterns and position deviation during laminating with a sealant. Thus, the workability of the film is excellent.

The lower limit of the dimensional change rate at 80°C in the longitudinal direction of the film with respect to the original length of the film in the temperature-dimensional change curve is -1.0%.

When the dimensional change rate is -1.0% or less, the pitch deviation of the printed patterns may occur or the position deviation may occur during laminating with a sealant. Thus, it may be difficult to process the film.

In the case of using polyethylene terephthalate or a copolymerized polyethylene terephthalate resin as the polyester resin (B) other than the polybutylene terephthalate resin (A), the transesterification ratio represented by the chain structure ratio (%) among ethylene glycol (EG), terephthalic acid (TPA), and butanediol (BD) in the polyester resin composition is preferably 0.8 or more and 3.0% or less. The upper limit is more preferably 2.8% or less, still more preferably 2.5% or less, and particularly preferably 2.0% or less. The lower limit is more preferably 0.9% or more, and still more preferably 1.2% or more.

When the transesterification ratio is 3.0% or less, the crystalline nature of the film increases, the film tends not to stretch in the running direction due to the tension applied in the printing step and the laminating step to a sealant or the like. Thus, the dimensional change rate at 80°C in the longitudinal direction of the film tends to be 1.0% or less with respect to the original length of the film in the temperature-dimensional change curve measured using the TMA.

When the transesterification ratio is 0.8 or more, the crystalline nature of the polyester resin composition on the surface of the film does not become too high. Therefore, the plane orientation coefficient of the film does not become too high, whereby the adhesion strength with a sealant or the like is maintained. Further, the PET resin staying in the step of melt-extruding the resin becomes an unmelted material, and is less likely to remain as a foreign substance in the molten film, whereby it is easy to maintain the quality of the film.

The method of measuring the transesterification ratio is as described in the examples.

The lower limit of the orientation coefficient (ΔNx) in the longitudinal direction (MD) of the biaxially oriented polyester film of the present invention is preferably 0.049. The orientation coefficient (ΔNx) is more preferably 0.050, and still more preferably 0.052. When the orientation coefficient (ΔNx) is less than the value, the orientation is weak, and thus sufficient strength as a film cannot be obtained, and the bag breakage resistance may be lowered. Further, in the case where the film goes through the printing step or the laminating step to a sealant, the film tends to stretch due to the tension and temperature applied to the film, whereby pitch deviation during printing or position deviation during laminating with the sealant may occur. When the orientation coefficient (ΔNx) is more than the value, sufficient strength as a film is obtained, and bag breakage resistance is easily obtained. Further, it is easy to obtain a film in which the dimensional change rate at 80°C in the longitudinal direction of the film is 1.0% or less with respect to the original length of the film in the temperature-dimensional change curve measured using the TMA.

The upper limit of the orientation coefficient (ΔNx) in the longitudinal direction (MD) of the biaxially oriented polyester film of the present invention is preferably 0.076, more preferably 0.075, and still more preferably 0.074. When the orientation coefficient (ΔNx) is more than the value, the dimensional change rate at 80°C with respect to the original length of the film in the temperature-dimensional change curve measured using the TMA may be saturated.

The method of measuring the orientation coefficient (ΔNx) in the MD is as described in the examples.

The upper limit of the plane orientation coefficient (ΔP) of the biaxially oriented polyester film of the present invention is preferably 0.154, more preferably 0.151, and still more preferably 0.146. When the plane orientation coefficient (ΔP) is more than the value, the orientation is strong in the direction parallel to the film surface, and the adhesion strength with a sealant or the like may decrease.

The lower limit of the plane orientation coefficient (ΔP) of the biaxially oriented polyester film of the present invention is preferably 0.136, more preferably 0.138, and still more preferably 0.140. When the plane orientation coefficient (ΔP) is less than the value, the orientation is weak, and the impact strength, bag breakage resistance, and the like may be lowered.

The method of measuring the plane orientation coefficient (ΔP) is as described in the examples.

The upper limit of the thermal shrinkage of the biaxially oriented polyester film of the present invention in each of the MD and TD directions after heating at 150°C for 15 minutes needs to be 4.0%. The thermal shrinkage is preferably 3.0%, and more preferably 2%. The upper limit of the thermal shrinkage in the TD direction after heating at 150°C for 15 minutes is particularly preferably 1.0%. When the thermal shrinkage is more than the value, pitch deviation may occur during printing or position deviation may occur during laminating with a sealant. Further, the bag breakage resistance may be lowered.

The lower limit of the thermal shrinkage of the biaxially oriented polyester film of the present invention in each of the MD and TD directions after heating at 150°C for 15 minutes is preferably -2.0%, more preferably -1.0% or more, still more preferably 0% or more, and particularly preferably 0.2% or more. When the thermal shrinkage is less than the value, the effect of reducing pitch deviation during printing and positional deviation during laminating with a sealant may be saturated, film sagging may cause pitch deviation during printing and positional deviation during laminating with a sealant, and further the bag breakage resistance may be lowered.

The method of measuring the thermal shrinkage after heating at 150°C for 15 minutes is as described in the examples.

The lower limit of the impact strength is preferably 0.05 J/$\mu$m. When the impact strength is less than the value, the strength may be insufficient when used as a bag. The upper limit of the impact strength is preferably 0.2 J/$\mu$m. When the impact strength is more than the value, the effect of improvement may be saturated.

As a means for improving the workability of the biaxially oriented polyester film of the present invention, it is effective to adjust the sliding properties of at least one surface of the film. The upper limit of the dynamic friction coefficient of at least one surface of the film is preferably 0.4 or less, preferably 0.39 or less, and most preferably 0.38 or less.

The upper limit of the haze per thickness of the biaxially oriented polyester film of the present invention is preferably 0.66%/$\mu$m, more preferably 0.60%/$\mu$m, and still more preferably 0.53%/$\mu$m. When the haze is more than the value, there is a possibility that the quality of printed characters and images may be impaired when the film is subjected to printing.

A printing layer may be laminated on the biaxially oriented polyester film of the present invention.

As a printing ink for forming the printing layer, an aqueous and solvent-based resin containing printing ink can be preferably used. Examples of the resin to be used in the printing ink include acrylic resins, urethane-based resins, polyester-based resins, vinyl chloride-based resins, vinyl acetate copolymer resins, and mixtures thereof. The printing ink may contain known additives such as an antistatic agent, a light blocking agent, an ultraviolet absorber, a plasticizer, a lubricant, a filler, a coloring agent, a stabilizer, a lubricating agent, a defoamant, a crosslinking agent, an anti-blocking agent, and an oxidation inhibitor.

The printing method of providing the printing layer is not particularly limited, and a known printing method such as an offset printing method, a gravure printing method or a screen printing method can be used. In order to dry the solvent after printing, a known drying method such as hot air drying, hot roll drying and infrared drying can be used.

Further, the biaxially oriented polyester film of the present invention may be subjected to a corona discharge treatment, a glow discharge treatment, a flame treatment, a surface roughening treatment to an extent that the purposes of the present invention are not impaired, and also subjected to a known anchor coating treatment, printing, decoration, and the like.

A gas barrier layer such as an inorganic thin film layer or a metal foil such as an aluminum foil may be provided on at least one surface of the biaxially oriented polyester film of the present invention.

In the case where an inorganic thin film layer is used as the gas barrier layer, the inorganic thin film layer is a thin film made of a metal or an inorganic oxide. The material for forming the inorganic thin film layer is not particularly limited as long as the material can be made into a thin film. From the viewpoint of gas barrier properties, inorganic oxides such as silicon oxide (silica), aluminum oxide (alumina), a mixture of silicon oxide and aluminum oxide are preferable. Particularly, a composite oxide of silicon oxide and aluminum oxide is preferable from the viewpoint of satisfying both flexibility and denseness of the thin film layer.

In the composite oxide, the mixing ratio of the silicon oxide and the aluminum oxide is preferably in a range of 20 to 70% of Al by the weight ratio of the metal components. When the Al concentration is less than 20%, the water vapor barrier property may be reduced. On the other hand, when the Al concentration is more than 70%, the inorganic thin film layer tends to be hard, and the film may be broken during secondary processing such as printing or lamination. Accordingly, the barrier property may be reduced. Note that the silicon oxide used herein is various silicon oxides such as SiO and $SiO_2$, or a mixture thereof, and the aluminum oxide used herein is various aluminum oxides such as AlO and $Al_2O_3$, or a mixture thereof.

The thickness of the inorganic thin film layer is usually in a range of 1 to 100 nm, and preferably in a range of 5 to 50 nm. When the thickness of the inorganic thin film layer is less than 1 nm, it may be difficult to obtain satisfactory gas barrier properties. On the other hand, even if the thickness is excessively thicker than 100 nm, the effect of improving the gas barrier properties along with excessive thickness is not obtained, and it is rather disadvantageous in terms of flex resistance and production cost.

The method of forming the inorganic thin film layer is not particularly limited. For example, a known vapor deposition method such as a physical vapor deposition method (PVD method) such as a vacuum vapor deposition method, a sputtering method or an ion plating method, or a chemical vapor deposition method (CVD method) may be adopted as appropriate. Hereinafter, a typical method of forming the inorganic thin film layer will be described by taking a silicon oxide-aluminum oxide-based thin film as an example. For example, in the case of adopting the vacuum vapor deposition method, a mixture of $SiO_2$ and $Al_2O_3$, a mixture of $SiO_2$ and Al or the like is preferably used as a vapor deposition material. Usually, particles are used as these vapor deposition materials. In this case, the size of each particle is desirably a size that does not change the pressure during vapor-deposition, and the preferable particle size is in a range of 1 mm to 5 mm. For heating, systems such as resistive heating, high frequency induction heating, electron beam heating, and laser heating can be adopted. It is also possible to adopt reactive vapor deposition by introducing oxygen, nitrogen, hydrogen, argon, carbon dioxide gas, steam or the like as a reaction gas, or using a means such as ozone addition or ion assist. Further, film forming conditions such as applying a bias to a body to be vapor-deposited (laminated film to be vapor-deposited) or heating or cooling a body to be vapor-deposited can be arbitrarily changed. The vapor deposition materials, reaction gases, application of a bias to a body to be vapor-deposited, heating/cooling, and the like can be changed as well even in the case of adopting a sputtering method or a CVD method.

Furthermore, a printing layer may be laminated on the inorganic thin film layer.

(Laminated body)

A layer of another material may be laminated on the biaxially oriented polyester film of the present invention, and as a method thereof, the layer can be layered after production of the biaxially oriented polyester film or can be layered during the film formation.

It is preferable to form a heat-sealable resin layer called "sealant" on at least one surface of the biaxially oriented polyester film of the present invention. The heat-sealable resin layer is usually formed by an extrusion lamination method or a dry lamination method. A thermoplastic polymer that forms the heat-sealable resin layer is not particularly limited as long as the adhesiveness of the sealant can be sufficiently exhibited. A polyethylene resin such as HDPE, LDPE or LLDPE, a polypropylene resin, and a polyolefin-based resin such as an ethylene-vinyl acetate copolymer, an ethylene-$\alpha$-olefin random copolymer or an ionomer resin can be suitably used.

The sealant layer may be a single layer film or a multilayer film, and may be selected according to the function desired. For example, in terms of imparting moisture-proof properties, a multilayer film in which a resin such as an ethylene-cycloolefin copolymer or polymethylpentene is interposed can be used. The sealant layer may contain various additives such as a flame retardant, a slip agent, an anti-blocking agent, an oxidation inhibitor, a light stabilizer, and a tackifier.

The thickness of a sealant layer 16 is preferably in a range of 10 to 100 $\mu$m, and more preferably in a range of 20 to 60 $\mu$m.

The layer configuration of the laminated body using the biaxially oriented polyester film of the present invention is not particularly limited as long as the laminated body has at least one layer of the biaxially oriented polyester film of the present invention and at least one layer of the sealant layer. Examples of the layer configuration include base material layer/sealant layer, base material layer/barrier layer/sealant layer, base material layer/barrier layer/resin layer/sealant layer, base material layer/resin layer/barrier layer/sealant layer, base material layer/barrier layer/printing layer/sealant layer, base material layer/printing layer/barrier layer/sealant layer, base material layer/barrier layer/resin layer/printing layer/sealant layer, base material layer/resin layer/printing layer/barrier layer/sealant layer, base material layer/printing layer/barrier layer/resin layer/sealant layer, base material layer/printing layer/resin layer/sealant layer, base material layer/printing layer/resin layer/barrier layer/sealant layer, and base material layer/resin layer/barrier layer/printing layer/sealant layer.

The laminated body using the biaxially oriented polyester film of the present invention can be suitably used for applications such as packaging products, various label materials, lid materials, sheet molded products, and laminated tubes. Particularly, laminated films or packaging bags (for example, a pouch such as a pillow bag, a standing pouch, and a four-sided pouch) are preferable. The thickness of the laminated body can be appropriately determined according to the application. For example, the laminated body is used in the form of a film or sheet having a thickness of about 5 to 500 $\mu$m, preferably about 10 to 300 $\mu$m.

EXAMPLES

Subsequently, the present invention will be described in more detail with reference to examples, however the present invention is not limited to the following examples. Note that the film evaluation was performed by the following measurement method.

[Dimensional change rate at 80°C]

The temperature was increased from room temperature to 200°C and measured using a thermal mechanical analyzer (TMA), manufactured by Shimadzu Corporation. In this regard, the rate of temperature increase was 10°C/min, the width of the measurement sample was 4 mm, the length of the measurement sample was 10 mm, and the initial tension was 100 mN. The dimensional change rate (%) at 80°C in the longitudinal direction (MD) of the film with respect to the original length of the film in the obtained temperature change curve was read.

[Transesterification ratio]

60 mg of the obtained film was dissolved in a solution of HFIP/$C_6D_6$ = 1/1 (weight ratio) and centrifuged. Then, the supernatant fluid was collected and $^{13}$C-NMR was measured. The peak area around 134 ppm due to butanediol-terephthalic acid-butanediol (BD-TPA-BD) was designated as Sa, the peak area around 133.7 ppm due to ethylene glycol-terephthalic acid-ethylene glycol (EG-TPA-EG) was designated as Sb, the peak area around 133.5 ppm due to ethylene glycol-terephthalic acid-butanediol (EG-TPA-BD) was designated as Sc, and then the transesterification ratio was calculated by Formula (1) below.

$$\text{Transesterification ratio (\%)} = Sc/\{0.5\,(Sa + Sb) + Sc\} \quad (1)$$

[Film thickness]

The thickness was measured using a dial gauge in accordance with the JIS K7130-1999 A method.

[Orientation coefficient ΔNx in vertical direction (MD) of film]

In accordance with the JIS K 7142-1996 A method, the refractive index (nx) in the longitudinal direction of the film, the refractive index (ny) in the transverse direction, and the refractive index (nz) in the thickness direction were measured for each sample using sodium D-ray as a light source and Abbe refractometer, and the orientation coefficient ΔNx was calculated by Formula (2).

$$\text{Orientation coefficient } (\Delta Nx) \text{ in MD} = n_x - (n_y + n_z)/2 \quad (2)$$

[Plane orientation coefficient ΔP of film]

In accordance with the JIS K 7142-1996 A method, the refractive index (nx) in the longitudinal direction of the film, the refractive index (ny) in the transverse direction, and the refractive index (nz) in the thickness direction were measured for each sample using sodium D-ray as a light source and Abbe refractometer, and the plane orientation coefficient ΔP was calculated by Formula (3).

$$\text{Plane orientation coefficient } (\Delta P) = (nx + ny)/2 - nz \quad (3)$$

[Thermal shrinkage]

The thermal shrinkage of the polyester film was measured by a dimensional change test method described in JIS-C-2151-2006.21 except that the test temperature was adjusted to 150°C and the heating time was adjusted to 15 minutes. The test piece was used in accordance with the description in 21.1 (a).

[Production of laminated body for evaluation]

A 70 μm-thick un-stretched polypropylene film (P1147, Toyobo Co., Ltd.) as a heat-sealable resin layer was bonded to the inner side of each of the film base materials shown in the examples and comparative examples described below by a dry lamination method using a urethane type two component curable adhesive ("Takelac (registered trademark) A525S" and "Takenate (registered trademark) A50, Mitsui Chemicals, Inc., were mixed at a ratio (weight ratio) of 13.5 : 1). The obtained films were subjected to aging at 40°C for 4 days, and thus laminated bodies having gas barrier properties for evaluation were obtained. Note that the thickness of the dried adhesive layer formed of the urethane type two component curable adhesive was about 4 μm.

[Pinhole resistance]

Each of the laminated bodies was cut into a size of 20.3 cm (8 inch) × 27.9 cm (11 inch), and the cut rectangular test film was left to stand at a temperature of 23°C and a relative humidity of 50% for 24 hours or more and then conditioned. Thereafter, each of the rectangular test films was rolled into a cylindrical shape having a length of 20.32 cm (8 inch) . Then, one end of the cylindrical-shaped film was fixed in the outer circumference of a disk-like fixed head of a Gelbo flex tester (NO.901 Model, manufactured by Rigaku Corporation) (in accordance with the standard of MIL-B-131C). The other end of the tester was fixed in the outer circumference of a disk-like movable head of the tester set on the opposite to the fixed head at 17.8 cm (7 inch) interval.

Then, a bending test was performed by continuously repeating 2000 cycles at 40 cycles/min, each of which was performed by rotating the movable head at 440° while moving the movable head closer to the fixed head by 7.6 cm (3.5 inch) along the axis between both heads set on the opposite to each other in parallel, successively moving the movable head forward by 6.4 cm (2.5 inch) without rotating the movable head, executing these movements reversely to turn the movable head back to the initial position. The test was performed at 5°C.

Thereafter, the number of pinholes generated in the portion of the tested film of 17.8 cm (7 inch) × 27.9 cm (11 inch) excluding the parts fixed in the outer circumferences of the fixed head and the movable head was measured (that is, the number of pinholes generated in 497 cm$^2$ (77 square inch) was measured).

[Bag breakage resistance after retorting]

Each of the laminated bodies as mentioned above was cut into a size of 15 cm square, and two pieces were layered such that the sealant was inside. The three sides were heat-sealed at a sealing temperature of 160°C and a sealing width of 1.0 cm to obtain a three-sided sealed bag having an inside dimension of 13 cm.

The obtained three-sided sealed bag was filled with 250 mL of water. Then, the mouth of the fourth side was closed by heat-sealing, and a four-sided sealed bag filled with water was produced.

The obtained four-sided sealed bag was subjected to a wet heat treatment in which the bag was held in hot water at 130°C for 30 minutes, and then dropped to a concrete plate from a height of 100 cm in an environment of a room temperature of 5°C and a humidity of 35% RH. The number of drops until tearing or pinholes occurred was counted.

[Lamination strength]

Each of the laminated bodies produced above was subjected to a wet heat treatment in which the laminated body was held in hot water at 130°C for 30 minutes, and then the laminated body in an undried state was cut into a test piece having a width of 15 mm and a length of 200 mm. The lamination strength (after retorting) was measured using a Tensilon universal material testing machine ("Tensilon UMT-II-500 type", manufactured by Toyo Baldwin Co., Ltd.) under the conditions of a temperature of 23°C and a relative humidity of 65%. The lamination strength was defined as the strength when the tension speed was 200 mm/min, water was applied between the laminated film and the heat-sealable resin layer, and the film was peeled at a peeling angle of 90 degrees.

[Pitch deviation during printing]

The obtained biaxially oriented polyester film was printed (two colors) under normal operating conditions using a commercially available multicolor printing machine ("three-color gravure printing machine PAS-247 Model", manufactured by Higashitani Tekkosho). When the film tends to stretch due to heating and tension in the drying step, the dimensional change increases and pitch deviation occurs. Therefore, printability (secondary processing suitability) was determined based on the criteria below.

The method of measuring pitch deviation is described below.

A test film having a width of 400 mm and a length of 150 m was cut out from the produced biaxially oriented film, and two-color (red and black) dragonfly patterns were printed on the treated surface of the test film at a pitch of 50 cm. The first dragonfly pattern was adjusted so that two colors of red and black overlapped with each other, and the amount of deviation between the red dragonfly pattern and the black dragonfly pattern after printing at 60 m was measured. The deviation amount was defined as a pitch deviation amount during printing and evaluated as below.

⊙: The printing pitch deviation was within 0.3 mm.
○: The printing pitch deviation was within 0.5 mm, and there was no practical problem.

Δ: The printing pitch deviation was observed to be about 1 mm, however the printing pitch deviation could be dealt with by adjusting the printing machine.

×: The printing pitch deviation was 1 mm or more, and it was difficult to deal with the printing pitch deviation by adjusting the printing machine.

[Example 1]

A polybutylene terephthalate resin (1100-211XG (CHANG CHUN PLASTICS CO., LTD., intrinsic viscosity of 1.28 dl/g), a polyethylene terephthalate resin having an intrinsic viscosity of 0.62 dl/g and including terephthalic acid//ethylene glycol = 100//100 (mol%), and silica particles having an average particle size of 2.4 $\mu$m as inactive particles were added and blended so that the silica concentration was 1600 ppm by weight using a single screw extruder . The resulting mixture was melted at 290°C, and then the melt line from the extruder to a die was introduced into a static mixer having 12 elements. As a result, the melt body was divided and laminated to obtain a multi-layer melt body formed of the same raw materials (theoretically, 4096 layers). The melt body was cast from a T-die at 270°C and closely stuck to a cooling roll at 15°C by an electrostatic adhesion method to obtain an un-stretched sheet.

Successively, the un-stretched sheet was subjected to 3.3 times roll stretching at 60°C in the longitudinal direction (MD), and subjected to 4.0 times stretching at 90°C in a transverse direction (TD) by leading the sheet to a tenter. The sheet was subjected to a heat tension treatment at 210°C for 3 seconds and a relaxation treatment by 5% for 1 second. Thereafter, gripping parts at both ends were cut and removed by 10% each to obtain a mill roll of a film having a thickness of 15 $\mu$m. The film forming conditions, physical properties, and evaluation results of the obtained film were shown in Table 1.

[Examples 2 to 7]

Each procedure was performed similarly to Example 1 except that the raw material composition and the film forming conditions in Example 1 were changed to those of the biaxially stretched films described in Table 1. The film forming conditions, physical properties, and evaluation results of the obtained film were shown in Table 1.

It is found that the films of Examples 1 to 7 of the present invention are excellent in bag breakage resistance, flex pinhole resistance, and adhesion strength with a sealant after a severe wet heat treatment like a retort sterilization treatment, and have small pitch deviation during printing, even in the step in which the tension is applied while the films are heated like the printing step, and good film workability.

[Comparative examples 1 to 6]

Films were obtained using a single screw extruder under the conditions described in Table 1. The film forming conditions, physical properties, and evaluation results of the obtained film were shown in Table 1.

(Comparative example 1) The obtained film had good pinhole resistance and good bag breakage resistance and lamination strength after retorting. However, since the composition of the polybutylene terephthalate resin was 100% and the dimensional change rate was large, pitch deviation occurred during printing.

(Comparative example 2) The obtained film had good pinhole resistance and small pitch deviation during printing. However, since the composition of the polybutylene terephthalate resin was 100% and the thermal shrinkage in the MD direction was 4.5%, the bag breakage resistance and lamination strength after retorting were poor.

(Comparative example 3) The obtained film had good lamination strength and small pitch deviation during printing. However, since the composition of the polybutylene terephthalate resin was 50%, the pinhole resistance and the bag breakage resistance after retorting were poor.

(Comparative example 4) The obtained film had good pinhole resistance, good bag breakage resistance after retorting, and small pitch deviation during printing. However, since the plane orientation coefficient was 0.155, the lamination strength was poor.

(Comparative example 5) The obtained film had good pinhole resistance and good bag breakage resistance and lamination strength after retorting. However, since the dimensional change rate was 1.1, the pitch deviation during printing was large.

(Comparative example 6) The obtained film had good pinhole resistance and lamination strength. However, since the thermal shrinkage in the MD direction was 4.7%, the bag breakage resistance after retorting was poor and the pitch deviation during printing was large.

[Table 1]

| Item | | unit | Example | | | | | | | Comparative example | | | | | |
|---|---|---|---|---|---|---|---|---|---|---|---|---|---|---|---|
| | | | 1 | 2 | 3 | 4 | 5 | 6 | 7 | 1 | 2 | 3 | 4 | 5 | 6 |
| PBT | | wt% | 90 | 90 | 70 | 70 | 70 | 60 | 80 | 100 | 100 | 50 | 70 | 70 | 60 |
| PET | | wt% | 10 | 10 | 30 | 30 | 30 | 40 | 20 | 0 | 0 | 50 | 30 | 30 | 40 |
| Extruding temperature | | °C | 270 | 270 | 260 | 270 | 280 | 270 | 270 | 270 | 270 | 270 | 250 | 290 | 270 |
| Retention time | | min | 6.9 | 6.9 | 3.0 | 6.9 | 12.0 | 6.9 | 6.9 | 6.9 | 6.9 | 6.9 | 3.0 | 13.0 | 5.0 |
| Presence of static mixer | | - | presence | presence | presence | presence | presence | presence | presence | presence | presence | presence | presence | presence | absence |
| Stretching ratio | MD | - | 3.3 | 3.8 | 3.8 | 3.8 | 3.8 | 3.8 | 3.3 | 2.8 | 4.0 | 3.8 | 3.8 | 3.8 | 3.0 |
| | TD | - | 4.0 | 4.0 | 4.0 | 4.0 | 4.0 | 4.0 | 4.0 | 4.0 | 4.0 | 4.0 | 4.0 | 4.0 | 3.3 |
| Thermo-setting temperature | | °C | 210 | 210 | 210 | 210 | 210 | 210 | 200 | 210 | 190 | 210 | 210 | 210 | 180 |
| Relaxation rate in TD | | % | 5 | 5 | 5 | 5 | 5 | 5 | 5 | 5 | 5 | 5 | 5 | 5 | 5 |
| Thickness | | μm | 15 | 15 | 15 | 15 | 15 | 15 | 15 | 15 | 15 | 15 | 15 | 15 | 25 |
| Trans-esterification ratio | | % | 0.9 | 0.9 | 1.3 | 1.8 | 2.9 | 2.3 | 1.2 | - | - | 4.2 | 0.7 | 4.8 | 3.4 |
| Orientation degree in MD | $\Delta Nx$ | - | 0.050 | 0.066 | 0.071 | 0.064 | 0.055 | 0.053 | 0.075 | 0.042 | 0.079 | 0.068 | 0.069 | 0.046 | 0.043 |
| Dimensional change ratio at 80°C | | % | 0.8 | 0.3 | 0.1 | 0.3 | 0.6 | 0.7 | 0.1 | 1.1 | -0.1 | 0.2 | 0.2 | 1.1 | 0.9 |
| Planar orientation coefficient | $\Delta P$ | - | 0.143 | 0.146 | 0.149 | 0.146 | 0.144 | 0.144 | 0.153 | 0.139 | 0.152 | 0.146 | 0.155 | 0.140 | 0.140 |
| Thermal shrinkage | MD | % | 1.0 | 1.7 | 1.9 | 1.5 | 1.3 | 1.8 | 3.0 | 1.5 | 4.5 | 1.4 | 1.5 | 1.5 | 4.7 |
| | TD | % | 0.5 | 0.5 | 0.5 | 0.5 | 0.5 | 0.5 | 0.5 | 0.5 | 1.2 | 0.4 | 0.5 | 0.5 | 0.5 |
| Pinhole resisitance | | number | 3 | 4 | 5 | 4 | 4 | 9 | 4 | 5 | 9 | 12 | 5 | 5 | 7 |
| Bag break resistance after retort treatment | | number | 48 | 50 | 50 | 62 | 71 | 35 | 73 | 50 | 29 | 23 | 45 | 41 | 30 |

(continued)

| Item | | unit | Example | | | | | | | Comparative example | | | | | |
|---|---|---|---|---|---|---|---|---|---|---|---|---|---|---|---|
| | | | 1 | 2 | 3 | 4 | 5 | 6 | 7 | 1 | 2 | 3 | 4 | 5 | 6 |
| Laminate strength | Normal state | N/15mm | 4.2 | 5.2 | 5.3 | 6.2 | 6.5 | 6.3 | 4.1 | 4.2 | 3.5 | 4.5 | 3.2 | 5.6 | 6.5 |
| | After retort treatment | N/15mm | 3.8 | 4.3 | 4.2 | 4.3 | 4.8 | 4.3 | 3.8 | 3.7 | 2.4 | 4.2 | 2.1 | 5.1 | 4.3 |
| Deviation in pitch at the time of printing | | - | ○ | ⊙ | ⊙ | ○ | ○ | ○ | ⊙ | × | ⊙ | ⊙ | ⊙ | × | △ |

INDUSTRIAL APPLICABILITY

According to the present invention, it is possible to obtain a polyester film that has excellent pinhole resistance and bag breakage resistance, excellent adhesion strength after boiling or retorting, and reduced pitch deviation during printing or position deviation during laminating with a sealant. The polyester film can be widely used as a food packaging or pharmaceutical packaging material, and thus it is expected to greatly contribute to the industrial world.

**Claims**

1. A biaxially oriented polyester film simultaneously satisfying conditions (a) to (d) below:

    (a) the film includes a polyester resin composition containing 60 to 90% by weight of a polybutylene terephthalate resin (A) and 10 to 40% by weight of a polyester resin (B) other than the polybutylene terephthalate resin (A);
    (b) a dimensional change rate at 80°C in a longitudinal direction of the film is 1.0% or less with respect to an original length of the film in a temperature-dimensional change curve measured using a thermal mechanical analyzer (TMA);
    (c) a thermal shrinkage at 150°C is 4.0% or less in a longitudinal direction and a direction perpendicular to the direction in which the film flows, that is, in a so-called transverse direction; and
    (d) a plane orientation coefficient ΔP of the film is in a range of 0.136 to 0.154.

2. The biaxially oriented polyester film according to claim 1, wherein
    the polyester resin (B) other than the polybutylene terephthalate resin (A) is at least one resin selected from (1) to (5) below:

    (1) polyethylene terephthalate, polyethylene naphthalate, polybutylene naphthalate, and polypropylene terephthalate;
    (2) a polybutylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized;
    (3) a polybutylene terephthalate resin in which at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized;
    (4) a polyethylene terephthalate resin in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized; and
    (5) a polyethylene terephthalate resin in which at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate is copolymerized.

3. The biaxially oriented polyester film according to claim 1, wherein the polyester resin (B) other than the polybutylene terephthalate resin (A) is a polyethylene terephthalate resin, and a transesterification ratio represented by a chain structure ratio (%) of ethylene glycol (EG), terephthalic acid (TPA), and butanediol (BD) in the polyester resin composition is in a range of 0.8 to 3.0%.

4. A laminated film in which a heat-sealable resin layer having a thickness of 10 to 100 μm is laminated on at least one surface of the biaxially oriented polyester film according to any one of claims 1 to 3.

## INTERNATIONAL SEARCH REPORT

| | International application No. |
|---|---|
| | PCT/JP2018/020338 |

**A. CLASSIFICATION OF SUBJECT MATTER**
Int.Cl. C08J5/18(2006.01)i, C08L67/02(2006.01)i
According to International Patent Classification (IPC) or to both national classification and IPC

**B. FIELDS SEARCHED**

Minimum documentation searched (classification system followed by classification symbols)
Int.Cl. C08J5/18, C08L67/02

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2016/171172 A1 (TOYOBO CO., LTD.) 27 October 2016, paragraphs [0014]-[0083] & EP 3287258 A1, paragraphs [0017]-[0116] & CN 107530952 A & KR 10-2017-0140293 A & TW 201704304 A | 1-4 |
| Y | JP 6123927 B1 (DAINIPPON PRINTING CO., LTD.) 10 May 2017, claims, paragraphs [0028]-[0031], [0041]-[0047], [0136], [0139] & JP 2017-150565 A & WO 2017/146165 A1 | 1-4 |
| Y | JP 2006-82319 A (DAINIPPON PRINTING CO., LTD.) 30 March 2006, claims, paragraphs [0007], [0019] (Family: none) | 1-4 |
| Y | WO 2015/178390 A1 (TOYOBO CO., LTD.) 26 November 2015, paragraphs [0044]-[0046] & EP 3147313 A1, paragraphs [0056]-[0058] & CA 2949471 A & CN 106459441 A & KR 10-2017-0013281 A & TW 201602184 A | 1-4 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 July 2018 (19.07.2018) | 31 July 23018 (31.07.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

17

**INTERNATIONAL SEARCH REPORT**

| International application No. |
| --- |
| PCT/JP2018/020338 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-195210 A (UNITIKA LTD.) 28 July 1998, paragraphs [0019], [0063] (Family: none) | 1-4 |
| Y | JP 2002-178471 A (UNITIKA LTD.) 26 June 2002, paragraphs [0011], [0012], [0024], [0025], [0038], [0039], [0050] (Family: none) | 1-4 |
| Y | JP 2002-88233 A (UNITIKA LTD.) 27 March 2002, paragraphs [0009], [0019], [0021], [0029], [0032] & US 2003/0069387 A1, paragraphs [0050]-[0056] & EP 1288261 A1 | 1-4 |

Form PCT/ISA/210 (continuation of second sheet) (January 2015)

**REFERENCES CITED IN THE DESCRIPTION**

**Patent documents cited in the description**

- JP 2014015233 A

- JP 2003002987 A